# EUROPEAN PATENT SPECIFICATION

(11) **EP 1 700 192 B1**
(45) Date of publication and mention of the grant of the patent: **30.09.2009**
(21) Application number: 03789397.1
(22) Date of filing: 23.12.2003
(51) Int. Cl.: G06F 3/023

(54) **METHOD AND APPARATUS FOR ENTERING DATA WITH AN EIGHT WAY INPUT DEVICE**
VERFAHREN UND VORRICHTUNG ZUR EINGABE VON DATEN MIT EINEM ACHTWEG-EINGABEGERÄT
PROCEDE ET DISPOSITIF D'ENTREE DE DONNEES AU MOYEN D'UN DISPOSITIF D'ENTREE A HUIT VOIES

(43) Date of publication of application: 13.09.2006
(73) Proprietor: Nokia Corporation, 02150 Espoo (FI)
(72) Inventor: FÜSSINGER, Thomas, 87746 Erkheim (DE)
(74) Representative: Nordic Patent Service
(86) International application number: PCT/EP2003/014796
(87) International publication number: WO 2005/064445

(56) References cited:
- DE-A- 10 147 938
- GB-A- 2 381 854
- US-A- 5 473 346
- US-A1- 2002 175 834
- SILFVERBERG M ET AL ASSOCIATION FOR COMPUTING MACHINERY: "PREDICTING TEXT ENTRY SPEED ON MOBILE PHONES" 1 April 2000 (2000-04-01), CHI 2000 CONFERENCE PROCEEDINGS. CONFERENCE ON HUMAN FACTORS IN COMPUTING SYSTEMS. THE HAQUE, NETHERLANDS, APRIL 1 - 5, 2000, CHI CONFERENCE PROCEEDINGS. HUMAN FACTORS IN COMPUTING SYSTEMS, NEW YORK, NY : ACM, US, PAGE(S) 9-16 , XP001090162 ISBN: 0-201-48563-X page 10

## Description

The present invention relates to input devices and methods for entering data in an electronic terminal, preferably a mobile communication terminal. The invention relates in particular to a method of using joystick movements to enter data and to a mobile communication terminal incorporating such a method.

### BACKGROUND ART

Current mobile communication terminals generally comprise at least a 12-key alpha numeric keypad, for composing telephone numbers and text messages, and a number of additional function keys, for initiating communications to a desired telephone number, turning the terminal on and off, navigating and selecting in the menu structure, etc.

Current mobile communication terminals provide a host of features but as electronic functionality is increasingly miniaturized, the size of a usable touch-typing keypad becomes much larger than the package needed for many modern devices. Thus, there is an increasing need for a widely acceptable method for entering data that can be easily incorporated into small handheld devices.

One proposed solution to this problem has been to use a joystick for entering characters. EP 1 168 147 purports to such a method of entering characters and commands using an eight-way joystick. In accordance with EP 1 168 147, a first plurality of selectable choices corresponding to some of the eight ways is presented to a user on a display. At least one of the choices represents a sub-set of the set of characters. The user then selects one of said first plurality of selectable choices by moving the joystick from the center position into one of the eight ways. Next, a second plurality of selectable choices corresponding to the eight ways is presented to the user, at least one of which represents a character of the selected choice; and the character from the second plurality of selectable choices is selected with a joystick movement from the center position into one of the eight ways.

Another proposed system disclosed in US2001/0048425 uses a twelve way joystick or 12-directional pad for alphanumeric and direction input. The twelve ways are allocated respective numerical values and letter groups. The sensors of the joystick are of the cascade type and divide the joystick movement range into two zones. The ambiguous entry letter groups is disambiguated by repetitive actuation of the joystick in the direction to which the letter group is allocated in and out to the outer zone, whereby one move in and out of the outer zone represents the entry of the first letter in the group, two movements in and out of the outer zone represents the entry of the second letter in the group, etc. Alternatively it is proposed to use a predictive editor application to disambiguate the ambiguous entries.

WO 03/048884 discloses a method in which an 8-direction joystick is used as an input device for inputting characters into an electronic mobile device. The electronic mobile device receives input signals when a user navigates the 8-direction joystick through a predefined input stroke sequence. The input signals are matched to a plurality of reference input stroke sequences comprising 3 to 6 strokes each. A character entry is derived from the recorded stroke sequence.

US 5,982,303 discloses a method in which an array of eight keys is used to enter data into an electronic mobile device. Ordered pairs of keystrokes are transformed into a full complement of alpha-numeric characters. The method employs an alphabet in which each character is represented by a two-stroke pictographic picture. The user presses the key corresponding to the beginning and ending points of the pictograph of the desired character.

US 5 473 346 discloses a data input device and method for producing signals corresponding to symbols, comprises: at least one manually actuatable switch having a home state and manually actuatable from the home state to one of a set of first states and manually actuatable from the set of first states to one of a set of second states including the home state. A first signal corresponding to a transition from the home state to a selected one of the set of first states is produced and a second signal corresponding to a transition from the selected one of the set of first states to a selected one of the set of second states is produced. An output signal representing one symbol is produced in response to the first and second signals. No output signals are associated with actuation sequences that involve less than three actuations.

Silfverberg M et al association for computing machinery: "Predicting text entry speed on mobile phones" 1 April 2000 (2000-04-01), Chi 2000 conference proceedings.

Conference on human factors in computing systems, the Hague, Netherlands, April 1 - 5, 2000, Chi conference proceedings, Human factors in computing systems, New York, NY : ACM, US, page(s) 9-16 , ISBN: 0-201-48563-x page 10 discloses a model for predicting expert text of the entry rates for several input methods on a 12-key mobile phone keypad. The model includes a movement component based on Fitt's law and a linguistic component based on digraph, or letter-pair, probabilities. Predictions are provided for one-handed thump and two-handed index finger input. This document also refers to the T9 method that works with a disambiguating algorithm that inputs each character with a single key press.

Finally, the availability of powerful computers in small packages has given rise to systems that bypass the use of keys or joysticks entirely, including, for example, voice recognition software which is responsive to spoken words, and handwriting recognition software which is responsive to a special stylus and touch screen.

### DISCLOSURE OF THE INVENTION

Each of the above referenced systems, however, suffers for deficiencies which limit their usefulness. Presenting selections and sub-selections - such as disclosed by EP 1 168 147 - leads to a multi step process in which the user needs to wait for the next display with sub-selections to appear and requires pivoting the joystick at least twice out of the center position and back for each entry. This method is therefore relatively slow and cumbersome. Methods involving more than two input device movements - such as disclosed by US 5 473 346 require too many movements per entry and will therefore receive very little user acceptance and they do not provide any improvement in input efficiency.

A twelve-way joystick, such as the US2001/0048425 patent application, requires a relatively complicated joystick construction with twelve sensors. Further, division into 12 ways results in a relatively small angle of only 30° between the individual ways. The user needs therefore to pivot the toggle stick very accurately in the correct direction in order to avoid inadvertent character entries.

The joystick movement sequence arrangement of the WO 03/048884 patent application uses relatively long sequences to enter a character, e.g. six consecutive movements of the toggle stick are required to enter a letter M or a letter S. The number of joystick movements to write the word "mast" is 6+4+6+4=20. Furthermore, the activation sequences for each letter of the alphabet have to learned or memorized by the user, a factor that will, given the average interest of users to learn once more how to write, probably receive have a low user acceptance. The method of the WO 03/048884 patent application does not present any solution to entering digits.

About 80 pictograms are used in the two-stroke key entry method disclosed in US 5,982,303. A user has to learn, memorize or look up these pictograms before use, which presents a significant hurdle to user-acceptance of such an input system.

Finally, while voice recognition systems do not require visual monitoring, they require speaking out loud, which is distracting and unsuitable for situations such as business meetings. Moreover, voice or handwriting recognition systems are less reliable than keystroke systems because they require the computer to interpret voice and handwriting patterns which may vary significantly from one user to the next.

On this background, it is an object of the present invention to provide a method of entering data in an electronic terminal with a standard eight way input device using a minimum number of required strokes and allowing a new user to employ the method immediately.

This object is achieved in accordance with the method of claim 1.

The method according to the present invention provides a number of advantages. It allows the same entries as a conventional key pad with twelve keys with a standard eight way digital joystick or eight directional pad. The standard twelve key keypad of e.g. mobile phones can thus be replaced by a single joystick, allowing further miniaturization of the terminals.

Moreover, a sequence of maximum two joystick movements is needed to enter a data value, allowing fast entry of digits and letters.

The twelve different sequences possible can easily be printed as a hard label around the joystick, allowing a new user to recognize immediately how the data is to be entered. By arranging the allocation of the digits in accordance with the layout of an analogue clock the ease of use for a new user is further increased and general user acceptance improved.

Letter groups are preferably assigned to the movement sequences in a manner analogue to the assignment of letter groups to the keys of a standard 12 key, mobile phone keypad.

Ambiguous entry of letter groups is disambiguated where possible by the use of a predictive editor program. In those situations where a predictive editor program cannot be used, e.g. when entering family names in the phonebook, subsequent activations of the joggle stick in the center position are used to disambiguate the data input.

The terminal used in the method is preferably capable of assuming a plurality of states, such as a numeric state and text state. In the numeric state the entry of digits are associated with the movement sequences. In the text state letter groups are associated with the movement sequences.

Digits can be entered in the text state by holding the dome switch at the end position of the last movement for a period of time that exceeds a threshold.

It is another object of the present invention to provide mobile communication terminal with a user interface comprising a standard eight way input device that requires few strokes to enter data and can be used by a new user immediately.

This object is obtained in accordance with claim 10, by providing a mobile communication terminal.

The terminal according to the present invention provides a number of advantages. The input device can be used for navigation, function selection, text and number entry as well as control of applications such as gaming. This is possible since the center sensor is used as a a so-called multifunctional soft-key. The selectable functions can comprise call and message handling functions as well as menu item activation. The input device can be used for navigation and thus call handling, message handling, menu control and navigation, text and number handling, gaming and other applications can be handled by a single input device. With the present invention the full feature user interface can thus be provided by a single joystick in combination with a display. Thus, rendering the standard twelve key keypad obsolete and allowing further miniaturization of mobile communication terminals without substantial drawbacks in the quality of the user interface.

The terminal preferably comprises a menu structure with a hierarchical tree-structure or a lateral menu structure. The processor may allocate navigational commands to the data values when the menu is entered in order to navigate through lists of menu items and associated the activation of the center sensor with the selection of a marked menu item.

The processor may associate the activation of a first predetermined pair of outer sensors with a clear or backspace function in the mode for numerical entry and the a mode for text entry.

The processor may associate the activation of a second predetermined pair of outer sensors with a change in the characters or commands allocated to the data values. Thus, the function of the input device could shift from e.g. text entry to cursor control/navigation through the text.

Further objects, features, advantages and properties of the methods and terminals according to the invention will become apparent from the detailed description.

### BRIEF DESCRIPTION OF THE DRAWINGS

In the following detailed portion of the present description, the invention will be explained in more detail with reference to the exemplary embodiments shown in the drawings, in which
Fig. 1 is a frontal view of a first example of a terminal,
Fig. 2 is a block diagram illustrating the general architecture of the terminal of Fig. 1,
Fig. 3 is a top view on a first preferred embodiment of an input device according to the invention,
Fig 4, is a cross-sectional view along line IV-IV of Fig. 3,
Figs. 5 and 6 illustrate a variation of the input device illustrated in Figs. 3 and 4,

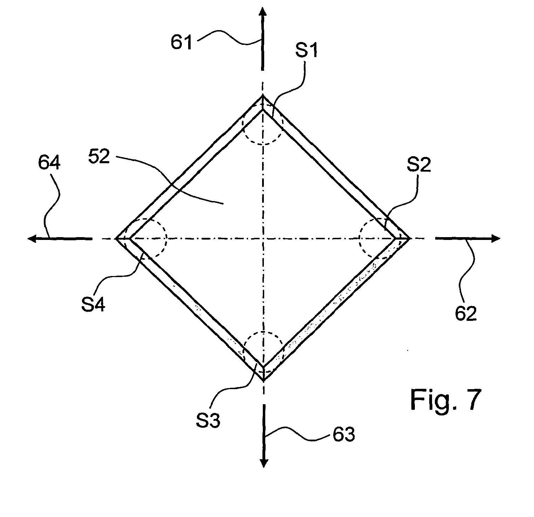

Fig. 7 illustrates a second preferred embodiment of the input device according to the invention,
Fig. 8 is a flow chart illustrating the operation of the input device according to the invention,
Fig. 9 is a frontal view of a preferred embodiment of a terminal according to the invention,
Fig. 10 is a flow chart illustrating the operation of the input in accordance with the preferred embodiment of a terminal according to the invention,
Figs. 11.1 to 11.3 represent a sequence of displays illustrating dialing and initiating a call,
Fig. 11.4 is a display illustrating the detection of an incoming call,
Figs. 12.1 and 12.2 are displays illustrating the operation of the menu structure,
Figs. 12.3 to 12.5 illustrate the initiation of a call from the last dialer numbers list,
Figs. 13.1 to 13.6 illustrate the entry of text using a predictive editor application,
Figs. 14.1 to 14.3 illustrate the correction of a mistyped word,
Fig. 15 illustrates a flow diagram for the editor application,
Fig. 16 discloses a second example of a terminal, and
Fig. 17 discloses a variation of the second example.

### DETAILED DESCRIPTION

In the following detailed description, a mobile communication terminal according to the invention in the form of a hand portable phone, preferably a cellular/mobile phone, will be described by the preferred embodiments.

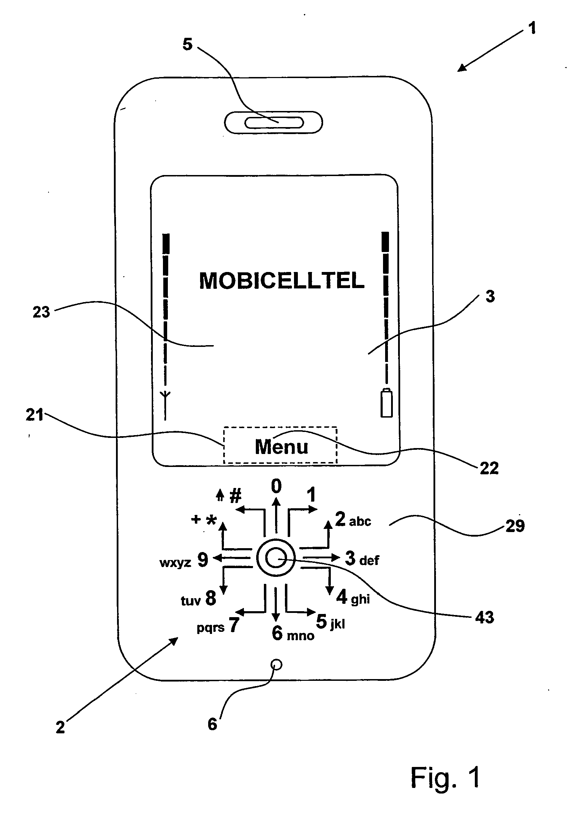

Fig. 1 shows a first example of a mobile phone 1. The mobile phone 1, comprises a user interface having a joystick 2, a display 3, an on/off button 4 (not shown, present though in the top of the phone) a speaker 5, and a microphone 6 (only the opening present in the bottom of the phone is visible). The mobile phone 1 is adapted for communication via a cellular network, such as the GSM 900/1800 MHz network, but could just as well be adapted for use with a Code Division Multiple Access (CDMA) or G3 network.

The joystick 2 has four sensors associated with the four orthogonal ways of the joystick, and a center sensor that can be activated by pressing joystick in the center position. The present functionality 22 of the center sensor is shown in a separate field 21 (soft-label) in the display 3 just above the joystick 2. The center sensor thus acts as a multifunction key and its present function depends on the state of the mobile phone 1. The center sensor can give access to the menu, the phonebook and can activate actions related to call handling and message handling. An exchangeable battery pack (not shown) is received in a covered recess on the rear side of the mobile phone 1.

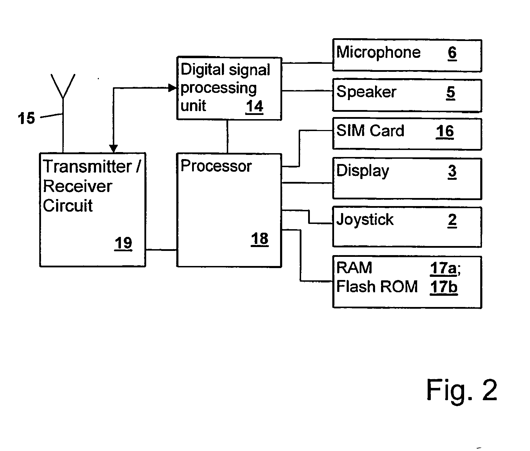

Fig. 2 schematically shows the most important components of the mobile phone 1. The processor 18 controls the communication with the network via the transmitter/receiver circuit 19 and an internal antenna 15.

The microphone 6 transforms the user's speech into analogue signals, the analogue signals formed thereby are A/D converted in an A/D converter (not shown) before the speech is encoded in a digital signal processing unit 14 (DSP). The encoded speech signal is transferred to the processor 18, which i.e. supports the GSM terminal software. The processor 18 also forms the interface to the peripheral units of the apparatus, including a RAM memory 17a and a Flash ROM memory 17b, a SIM card 16, the display 3 and the joystick 2 (as well as data, power supply, etc.). The DSP 14 speech-decodes the signal, which is transferred from the processor 18 to the speaker 5 via a D/A converter (not shown).

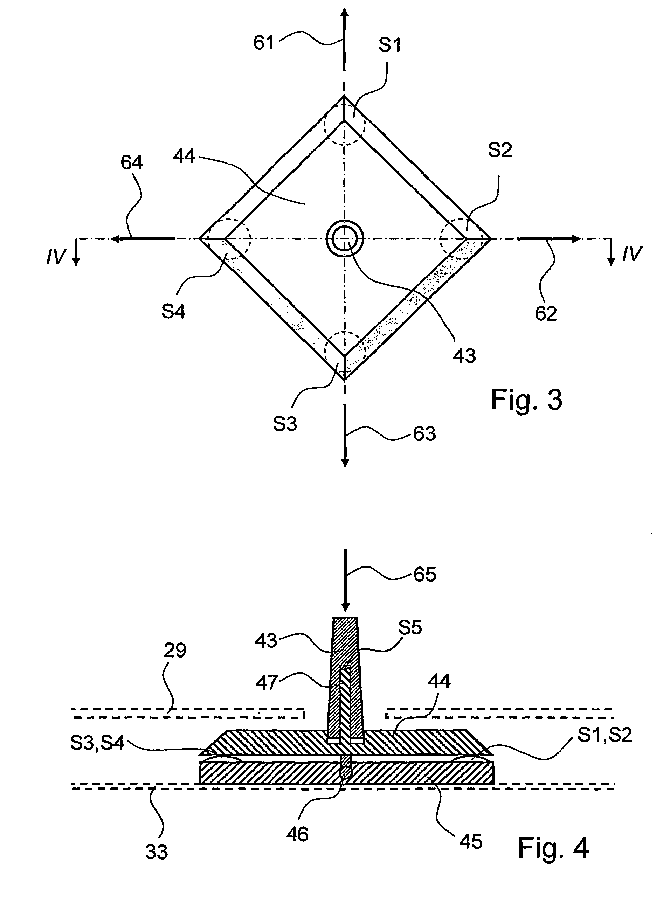

Figs. 3 and 4 illustrate a preferred embodiment of the joystick 1 in a top view and a cross-sectional view. The joystick 2 comprises a toggle stick 43 that is connected a quadratic plate 44. The plat 44 is pivotally connected to a base plate 45 via a ball-joint 46. The toggle stick can thus be pivoted out of shown the centre position in any direction in the plane of the base plate. Four dome switches S1..S4 form the outer sensors of the joystick 2. The dome switches S1..S4 are arranged on the base plate under the corners do the dome plate 44, i.e. when the toggle stick 43 is pivoted in the direction of arrow 61 switch S1 is activated, when the toggle stick is pivoted in the direction of arrow 62 switch S2 is activated etc.

As illustrated in Fig. 4, the joystick 2 comprises a toggle stick 43 mounted in the center of the quadratic plate 44. A centrally placed pivot pin 46 with a spherical head protrudes from the bottom of plate 44. The spherical head of the pivot pin 46 is received in a corresponding recess in a quadratic base plate 45.

The base plate is provided with four dome switches S1,S2,S3,S4, one on each corner of the base plate. The dome switches S1..S4 are resilient and urge the plate 44 in a position parallel to the base plate 45. The toggle stick 43 can thus be urged to pivot out of the center position and returns automatically to the center position when no force is applied to it.

The base plate 45 is mounted on and electrically connected with a printed circuit board 33 inside the mobile phone. The toggle stick 43 protrudes from the mobile phone 1 though and opening in the front cover 29.

The toggle stick 43 is provided with a downwardly opening central longitudinal recess that is placed over a pin 47 that protrudes from the upper side of plate 44. A dome switch S5 is placed on top of the pin 47 and engages the internal end of the recess in the toggle stick. When the toggle stick 43 is pushed down in the direction of arrow 65 switch S5 is activated. The dome switch S5 is resilient and when no downward force is applied to the toggle stick the switch S5 returns automatically to its non-active position. The construction allows the center switch to be activated in any position of the toggle stick, i.e. the toggle stick does not need to be in its neutral position to activate the center switch.

As an alternative to the center switch S5, the activation of all four switches S1,S2,S3 and S4 can be used as a center switch.

When the toggle stick 43 is pivoted in the direction of arrows 61,62,63,64 switches S1,S2,S3,S4 are activated respectively.

Data is entered in the mobile phone by sequences of joystick movements. On the front cover of the phone the joystick movement sequences are depicted as hard labels around the opening through which the toggle stick 43 protrudes through the front cover 29. Depending on the state of the mobile phone numbers or text is entered. In a numeric mode, digit "3" is entered by pivoting the toggle stick 43 in the direction of arrow 62. Digit "4" is entered by pivoting the toggle stick 43 in the direction of arrow 62 and then, without returning to the middle position, pivoting the toggle stick 43 in the direction of arrow 63. In the text mode these joystick movement sequences correspond to the entry of one of the letter group "abc" and "ghi" respectively. The handling of the ambiguous entry of letters is described in detail further below.

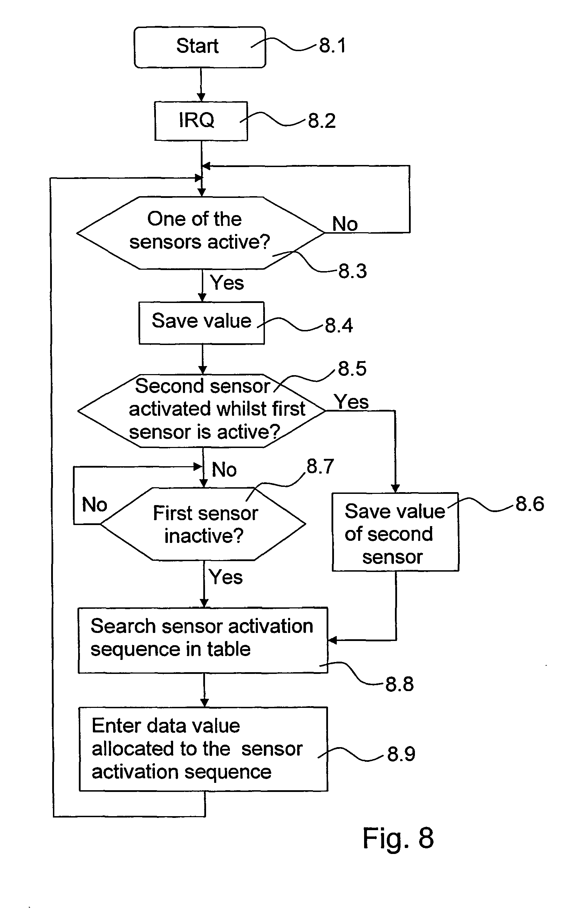

The processor monitors the joystick movements through the switches S1 to S4. Fig. 8 is a flowchart that illustrates the operation of the process of entering a data value in the phone. At step 8.1 the process is started. The processor 18 monitors the state of the switches S1..S5 via interrupt request lines (IRQ), step 8.2. In step 8.3 the processor 18 monitors if one of the sensors is active. If not, the processor returns to step 8.3 again to monitor if one of the switches is active. If one of the sensors is active, its value is saved in step 8.4. In step 8.5 the processor monitors if a second sensor is activated whilst the first sensor is still active. If yes, the value of the second sensor is saved and the process moves on to step 8.8. If no second sensor is activated whilst the first sensor is active the processor monitors in step 8.7 when the first sensor becomes inactive. The monitoring is continued until the first sensor has become inactive. Then, the process moves on to step 8.8. When the process arrives at step 8.8 the processor 18 looks up in a table which data value corresponds to the recorded switch activation sequence. Table 1 shows which data values are allocated to the different sensor activation sequences:

**Table 1.**

| First state active switches: | Second state active switches: | Data value entered |
|---|---|---|
| S1 | - | 0 |
| S1 | S1+S2 | 1 |
| S2 | S1+S2 | 2 |
| S2 | - | 3 |
| S2 | S2+S3 | 4 |
| S3 | S2+S3 | 5 |
| S3 | - | 6 |
| S3 | S3+S4 | 7 |
| S4 | S3+S4 | 8 |
| S4 | - | 9 |
| S4 | S1+S4 | 10 |
| S1 | S1+S4 | 11 |

Depending on the state of the mobile phone (different states explained in detail below) different characters, letter groups or functions are associated with a particular data value and in a preferred embodiment the association is as shown in table 2 below:

**Table 2.**

| Data value entered | Associated digit / character in numeric entry mode | Associated characters / function in text entry mode | Associated function in navigation mode |
|---|---|---|---|
| 0 | 0 | Space | Move up ? |
| 1 | 1 | . ,- ? ! '@ : | - |
| 2 | 2 | abc | - |
| 3 | 3 | def | Move right? |
| 4 | 4 | ghi | - |
| 5 | 5 | jkl | - |
| 6 | 6 | mno | Move down ? |
| 7 | 7 | pqrs | - |
| 8 | 8 | tuv | - |
| 9 | 9 | wxyz | Move left ? |
| 10 | * | Alternative | - |
| 11 | # | Shift | - |

After entering the data value the process returns to step 8.3 to monitor the activation of the sensors.

A tone can be sounded for each sensor activation, followed by a input confirmation tone when a data value is successfully entered, or followed by a rejection tone when the data value entry failed.

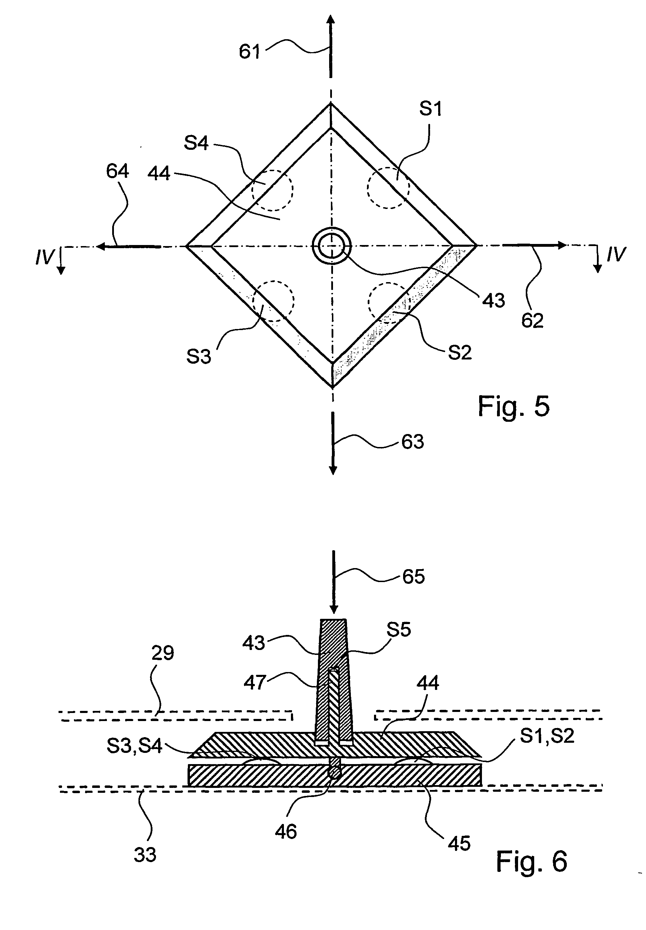

Figs. 5 and 6 show a variation of the joystick construction that can also be used with the present invention. The joystick according to this embodiment is substantially identical to the joystick illustrated in Figs. 3 and 4. The switches S1,S2,S3,S4 are however not located in the corners of the base plate but instead at the middle of the side surfaces of the quadratic base plate. Thus, when the toggle stick 43 is pivoted in the direction of arrow 61 switches S1 and S4 are activated simultaneously. When pivoted in the direction of arrow 62 switches S1 and S2 are activated simultaneously and so on for the other directions. The combined switches S1 and S2 thus form sensor for detecting joystick movement in the direction of arrow 62. The input process of Fig. 8 in principle identical, in that the processor treats the different simultaneous activations as sensor activations. In order to arrive at the same data values for the same joystick movement sequences the look up table used is modified as shown in table 3 below:

**Table 3.**

| First state active switches: | Second state active switches: | Data value entered |
|---|---|---|
| S1+S4 | - | 0 |
| S1+S2 | S1+S4 | 1 |
| S1+S4 | S1+S2 | 2 |
| S1+S2 | - | 3 |
| S1+S2 | S2+S3 | 4 |
| S2+S3 | S1+S2 | 5 |
| S2+S3 | - | 6 |
| | S3+S4 | 7 |
| S3+S4 | S2+S3 | 8 |
| S3+S4 | - | 9 |
| S3+S4 | S1+S4 | 10 |
| S1+S4 | S3+S4 | 11 |

The characters and commands associated with the entered data values can be the ones illustrated in table 2. above.

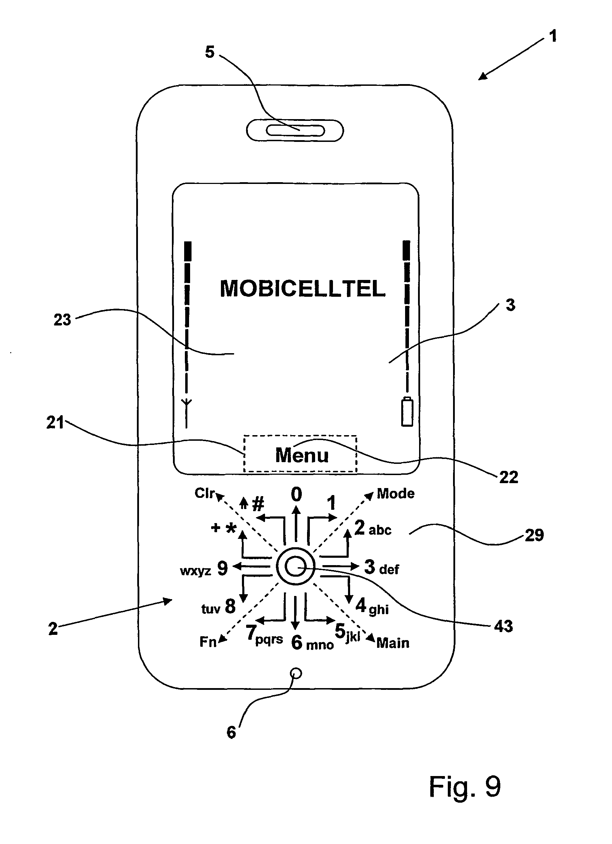

According to a preferred embodiment - illustrated in Fig. 9 - the user interface can be provided with extra functions that can be activated by diagonal movements of the joystick. These movements lead in the first embodiment of the joystick to a simultaneous activation of two switches, e.g. a joystick movement diagonally upward and left will activate switches S1 and S4 substantially simultaneously, i.e. an activation of the two switches within a short time window, e.g. 5 milliseconds. In the preferred embodiment of the joystick the same movement will activate switch S4 only. The diagonal movements are according to a preferred embodiment associated with the following functions:

**Table 4**

| Mode | ↖ | ↗ | ↘ | ↙ |
|---|---|---|---|---|
| Idle | Last dialed numbers | Phone number list | Volume | Change function center switch |
| Number | Backspace | Change to/from navigation | Shortcut to idle mode | Change center function |
| Text | Backspace | Change to/from navigation | Shortcut to idle mode | Change center function |
| Incoming call | Reject call | | | Change center function |
| Menu | | | Shortcut to idle mode | Change center function |
| Games | Navigate/ steer/ control | Navigate/ steer/ control | Navigate/ steer/ control | Navigate/ steer/ control |

The volume control can be in the form of an endless loop with increasing level that dropping back to low level at the end of the loop.

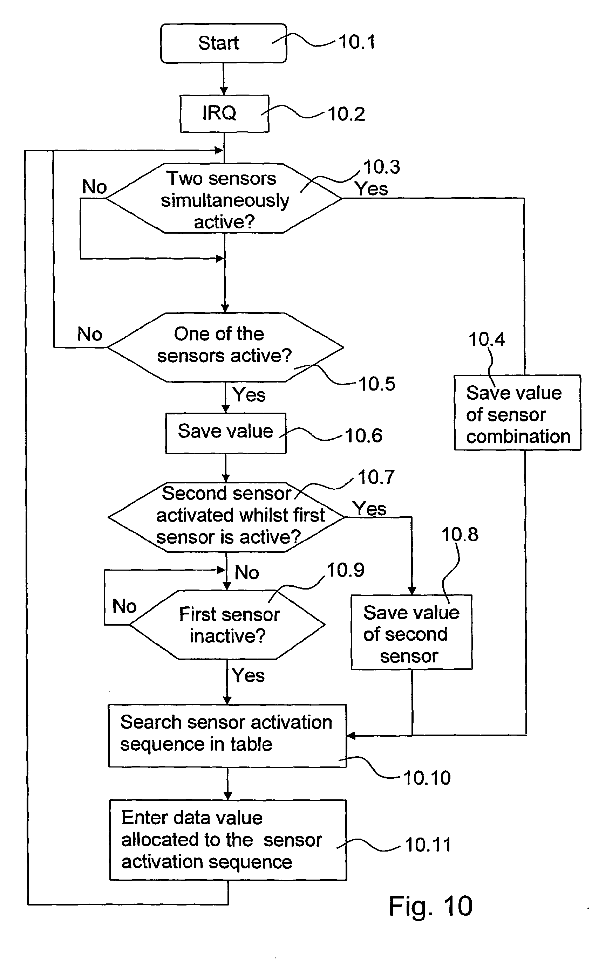

Fig. 10 is a flowchart that illustrates the operation of the process of entering a data value and controlling the mobile phone according to the preferred embodiment. The process starts in step 10.1. The processor 18 monitors the state of the switches S1..S5 via interrupt request lines (IRQ). The interrupt request lines are defined in step 10.2. In step 10.3 the processor monitors if a combination of two sensors is activated simultaneously, thus detecting if any diagonal joystick movement has been made. If yes, the value of this sensor combination is saved in step 10.4 and in step 10.10 the data value allocated to the sensor activation combination is looked up in a table and in step 10.11 the allocated data value is entered. After entering the data value the process returns to step 10.3 to monitor the activation of simultaneous activation of two sensors. If not two sensors are activated simultaneously, the process moves on to step 10.5 in which the processor 18 monitors if one of the sensors is active. If not, the processor returns to step 10.2. If one of the sensors is active, its value is saved in step 10.6. In step 10.7 the processor monitors if a second sensor is activated whilst the first sensor is still active. If yes, the value of the second sensor is saved in step 10. 8 and the process moves on to step 10.10. If no second sensor is activated whilst the first sensor is active the processor monitors in step 10.9 when the first sensor becomes inactive. The monitoring is continued until the first sensor has become inactive. Then, the process moves on to step 10.10. When the process arrives at step 10.10 the processor 18 looks up in a table which data value corresponds to the recorded sequence as shown in table 1 above.

### Call handling

The mobile phone 1 has a plurality of states in which it operates. When the phone is switched on it will start in the idle mode, as shown in Fig. 1. In this mode the phone is ready to receive the entry ot a phone number. The main area 23 of the display 3 shows an identification of the network operator concerned (here, a fictive company called MOBICELLTEL), as a so-called operator logo, and a dedicated area 21 shows the present functionality of the center sensor S5. The function of the center sensor S5 in the idle mode is access to the main menu loop of the phone.

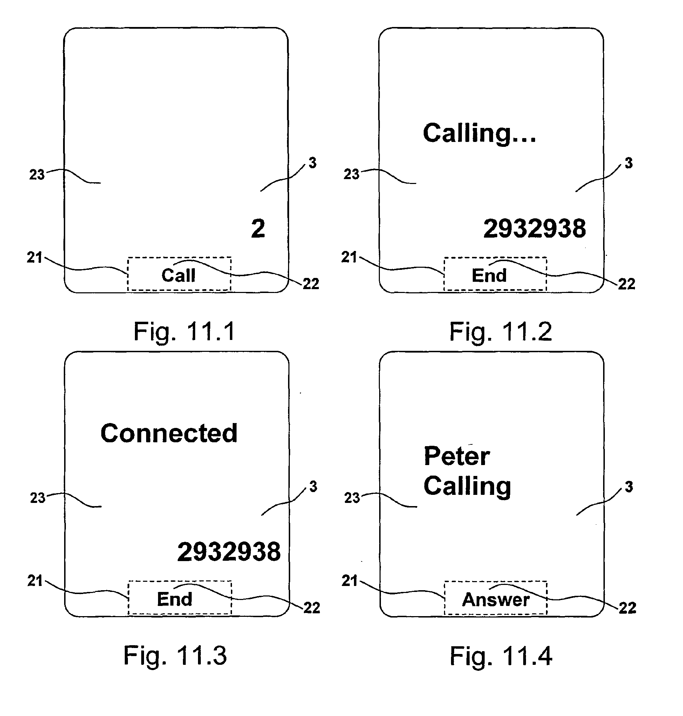

With reference to Figs. 11.1 to 11.3 the placement of a call will be illustrated hereafter. In the idle mode digits are associated with the joystick movement sequences. When the joystick is moved from the centre position right (arrow 62) and then without returning to the center position is moved up (arrow 61) the processor recognizes that the activation sequence to which the digit "2" is associated has been carried out and the processor enters the digit "2" and shows it in the main area 23 of the display 3 (Fig. 11.1). The function of the center switch S5 changes to initiate call and the processor changes the soft label 22 to "Call". By performing further joystick movement sequences the complete telephone number is entered and the call is placed by activating the joystick in the center position. The phone status changes to the call establishment mode. The processor initiates the call and add the texts "Calling.." to the information displayed in the main area of the screen (Fig. 11.2). The processor also changes the functionality of the center switch S5 to terminate call and changes the soft label 22 to "End". When the call is established the phone status changes to the connected mode and the processor displays the text "Connected" in the main area of the display whilst maintaining the function of the center switch as call termination (Fig.11.3). When the call is finished the user activates the centre switch "End" and the phone returns to the idle state (Fig. 1).

When a call is received the phone changes to the call receive mode and the processor displays a text identifying the caller when possible. The identification can either be the phone number or the calling the name associated therewith in accordance with the phone book entries in the receiving phone (Fig. 11.4). The processor changes the function of the center switch S5 to answer call and changes the soft-label 22 to "Answer". The call can be rejected by moving the joystick diagonally left-up "Clr". Alternatively, the call can be diverted to a voicemail service, if the phone or the network operator has such a function and depending on the settings when the joystick is moved diagonally left-up when during an incoming call. After rejecting/diverting the call the phone returns to the idle state.

The mode of operation of the joystick can be switched from number entry to controlling cursor movement by moving the joystick diagonally right-up "Mode". A cursor is then displayed, and the cursor can be moved back and forth, and if the entered number covers more than one line, also up and down by corresponding joystick movements. This is e.g. useful when a digit at the start of the number has been entered incorrectly. Both in the number entry and in the cursor control mode the last entered digit / the digit just before the cursor is deleted by moving the joystick left-up "Clr". By moving the joystick diagonally right-up "Mode" the mode is returned to the number entry.

### Menu navigation

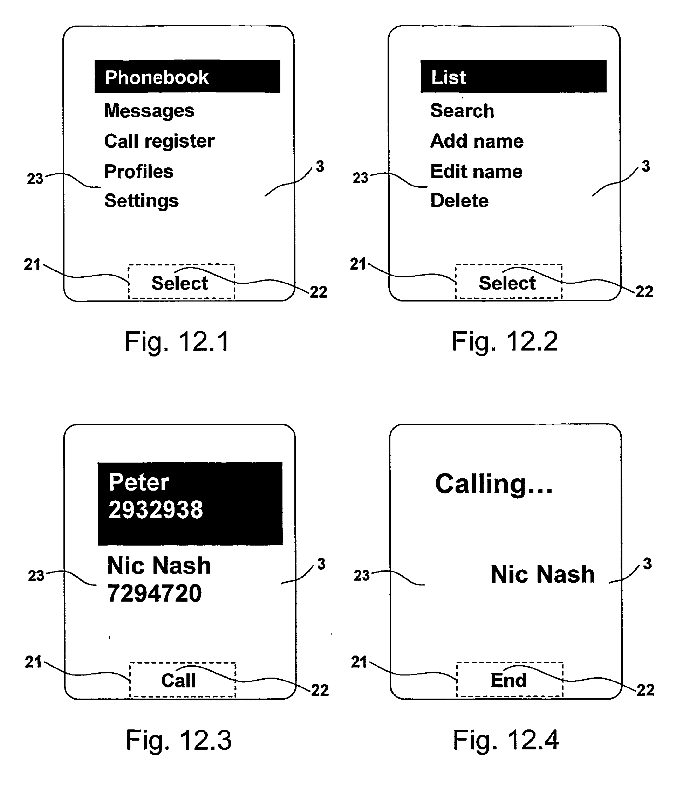

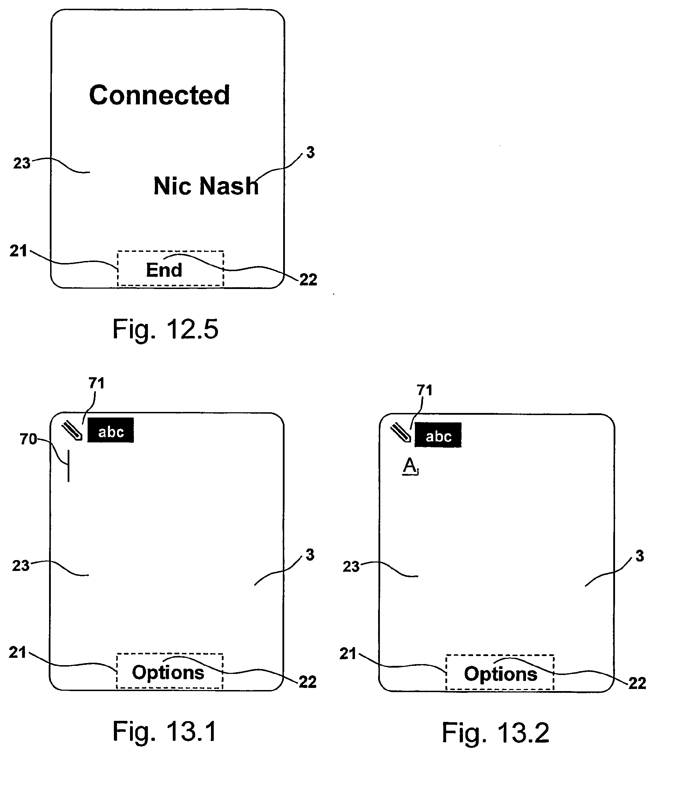

By activating the center switch S5 "Menu" in the idle mode (Fig. 1) the menu is entered and the display lists the available menu items (Fig. 12.1) in a scrollable list with one item marked (marking in this embodiment by a reverse coloring of the text of the menu item concerned). The joystick is used to jump from one menu item to the next up or down in the list. The marked menu item is activated by pressing the center switch S5 "Select".

Stepping back in the menu is done by moving the joystick diagonally left-up "Clr".

The phonebook is for example entered by activating the center switch S5 "Select" when the phonebook menu item is marked. Here, the user is presented the phone book submenu items such as search numbers, list numbers, add number, edit number, delete number, etc (Fig 12.2). In the submenu items where an entry in the phone book is created or entered the names and eventually the address are edited by the multi tap like text entry mode described in detail below. The numbers are entered as described previously.

Likewise any other menu items and submenu items can be accessed.

When activating a gaming application the joystick is often used exclusively or nearly exclusively for navigation, and the center switch for "firing" or the like. The default functions and shortcuts do thus not work. Returning to the menu structure from such an application is done by activating the center switch for a long period, i.e. five second. The game ot the like is of course automatically interrupted when an incoming call is detected.

In all modes other than the idle mode and gaming or the like mode, a joystick movement diagonally down-right is a shortcut directly back to the idle mode.

### Shortcut Last dialed numbers

By moving the joystick diagonally left-up in the idle mode the last dialed members are presented in a scrollable list (Fig. 12.3). One of the numbers in the list is marked by reverse print and the user an jump from one menu to the other by using the joystick as a navigation instrument, i.e. pushing it up or down to move upwards and downwards respectively through the list. The function of the center switch S5 is "Call". A call is thus placed by marking the desired number in the list and then activating the center switch S5 "Call" (Fig 12.4). When the call the replied the text in the display changes to "Connected to ...". Call termination is as described previously. The dialed numbers list can also be accessed in the menu under the corresponding menu item.

### Shortcut to phone number list

Analogous to the last dialed number list there is a shortcut to the list of phone numbers in the phonebook by moving the joystick diagonally left-up in the idle mode. A call is placed by marking the desired number in the list by using the up-down function of the joystick and then activating the center switch S5 "Call".

### Message handling

When an incoming message is detected the text "Message received" is displayed and the function of the center switch S5 changes to "Show". The message is shown if the center switch is activated. If instead the joystick is moved diagonally left up "Clr" phone returns to the idle state without showing the message.

### Text entry/message creation with the predictive editor program

The predictive editor is a disambiguating software. An input from the joystick 2 is processed in an input manager. Input data is passed to a processing module, which keeps a record of the current input sequence until the user has accepted a word based on this sequence by inserting a space. When a group of letters been received by the processing module, the current sequence of inputs (read: letter groups) is communicated to a prediction processor, which forwards the sequence to one or more modules acting as electronic vocabularies.

The vocabulary modules work in parallel and respond individually if they contain data matching the current sequence of letter groups. One vocabulary module may include a dictionary containing words in a natural language, e.g. English, selected by the user and used as editing language. According to a preferred embodiment some of the other vocabulary modules may contain personalized user defined words.

The vocabulary modules often supply a plurality of matching words. The prediction processor accumulates a complete list of matching words for the selection list from all vocabulary modules. When the prediction processor has finalized the processing, the processing module transfers the selection list to a display manager and the display 3 via the internal bus means.

In the most cases, the disambiguation software will work as an editor server and therefore pass data strings directly to another client or application program running on the processor 18, too. In this case the joystick 2, the input processor and the display manager will be integrated in the application program using the predictive editor as a server. These applications may include the electronic phone book memory, notepad, messages, calendar, and internet browsing.

### Vocabulary look-up processing.

Vocabulary look-up processing is handled by a computer program being available on the market. Therefore these parts will not be described further.

### Writing a new message

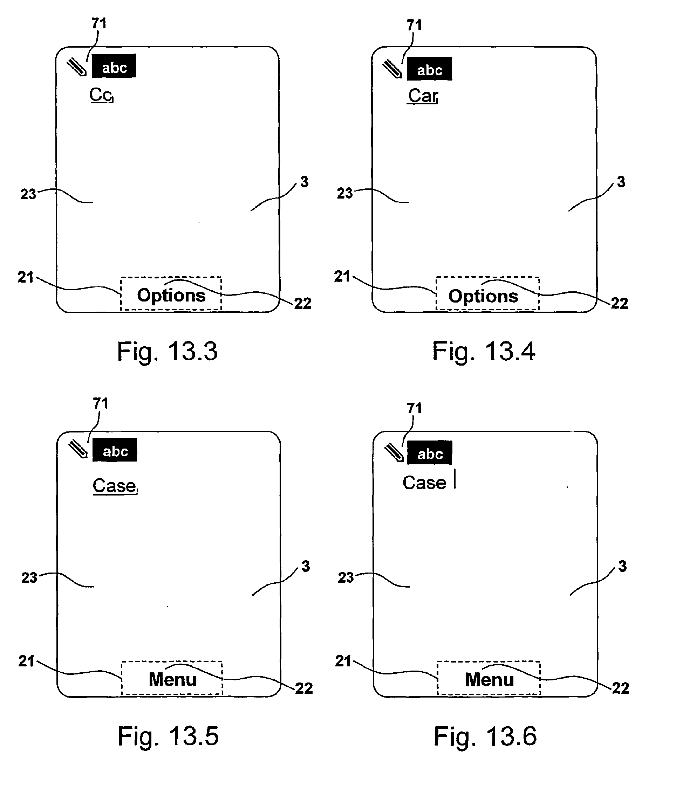

A new message is created via the main menu item "Messages" and then selecting the submenu item "Create message". An empty message is then presented (Fig. 13.1) The preferred embodiment of the text input according to the invention will be uses a predictive editor application. The core functionality of the predictive editor application is its ability to generate the intended text onto the screen from ambiguous inputs entered with the joystick movement sequences. This provides a more efficient method of entering text than the multi-tap method requiring many more joystick activations per letter due to the multiple activation of the centre sensor after a given joystick sequence.

The predictive editor program makes this possible because it is based on a large intelligent dictionary that allows the editor to predict what word the user intended based on the number of key-presses and combination of key-presses. Often several words will match the keystrokes that are input and the user chooses the desired match from those offered by the predictive editor program.

With reference to Figs. 13.1 to 13.6 a display sequence illustrates the operation of the text input using the predictive editor program. In the initial display (Fig.13.1), a cursor 70 indicates that the editor is ready for a "new" word to be typed to the editor. Above the text area an icon 71 indicates the status of the phone (spelling) based on the predictive editor program. Furthermore the soft-label 22 indicates the functionality of the center switch S5 during the text entry "options". When activating the joystick diagonally left-up the phone leaves the text editing mode and jumps one step back in the menu structure. When pressing the "Options" center switch S5 the user is offered a list of actions as "Send the text as an SMS", "Save the text", "Clear the display" and "Switch between predictive editor and multi tap editor (the text editor that disambiguates by the number of activations of the center switch after each joystick movement sequence)". Further, the "Options" center switch S5 will provide the user with some editing tools that will be discussed later on.

When the phone has no other "softkey" than the center switch S5 the center switch will have the functionality "Options", while the "back" (i.e. step back in the menu structure) functionality is handled moving the joystick diagonally up-left.

The layout of the letter groups and the associated joystick movement sequences are shown in Figs. 1 and 9. When starting to type a word (Fig. 13.1), the user simply moves the joystick in the sequence belonging to the letter group containing the desired letter. Figs. 13.2 to 13.6 show displays how the user makes the following joystick movements in order to enter the word "case":
Right and then up to "2 abc" insert the "c"
Back to center
Right and then up "2 abc" to insert the "a"
Back to center
Down and then left "7 pqrs" to insert the "s"
Back to center
Right and back to center "3 def " to insert the "e"
Up and back to center "␣" to enter a space and finalize the word.

Often when entering the first few letters of a word, the predictive editor program is not yet able to display the intended characters and may erroneously display an unintended string of characters. These are therefore displayed as merely temporary characters in the display while the predictive editor program is evolving a match. When continuing the typing of the remaining characters in the word, the displayed characters will become more accurate. No matter what the display shows, the user simply enters the next character in the word he wants to type.

During the inputting of a word to the predictive editor program, all the characters in the word are shown with underlining 74. This indicates that the word has not yet been finalized and all the characters shown underlined may still change as the predictive editor program evolves a match to the joystick sequences. As long as the entering of a word is in progress the already entered part of the word remains underlined.

The user accepts a word by entering the character "space", or by switching the predictive editor program off. When the user accepts a word this will be frozen meaning that the predictive editor program is no longer working on it and the marking 74 will be replaced the cursor bar 70. When spaces between words are deleted, the two words are concatenated into one, but the user is allowed to continue adding characters to the first word. In any situation, the word will be finally inserted, the text will no longer be underlined and the cursor 70 reappears after the accepted word.

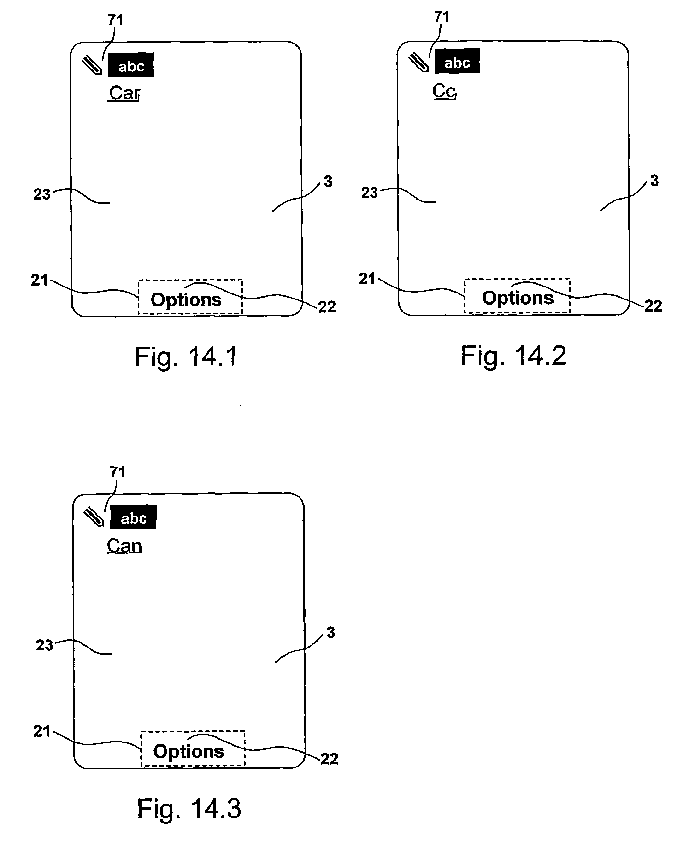

The user can delete characters backwards in a word by simply moving the joystick diagonally left-up "Clr" once for each character to be deleted. The active word might in this situation also change based on the remaining key sequence. This is illustrated in Fig. 14.1 to 14.3 where the suggested match "Car" in the display is changed to "Cc" by deleting the last entered character and changed again to "Can" by the joystick movement sequence down and then left "6 - mno".

If the user deletes a complete word, the phone returns to the "initial word entry" mode, and the user can again type a new word.

If the user has typed a word and frozen the word by moving the joystick up and back to the center "space", and then clears this space after the word, then the cursor 70 will be placed at the end of the word but the predictive editor program will at this point no longer be active (the already entered word will not be underlined). If the user clears from this state, he will remove the last character of existing word, and then this word which was left of the cursor 70 will become underlined and active again.

### Special characters

While the predictive editor program is active, activating joystick sequence up then right " 1 " will allow a smart insertion of punctuation. This means that the predictive editor program will try to predict, based on the situation, which commonly used punctuation mark, is intended. These may include the period, comma, question mark, exclamation point, and apostrophe. If the user e.g. wants to type the word "can't", he activates the following sequence:
Right then up "2 abc " to insert the "c"
Back to center
Right then up "2 abc " to insert the "a"
Back to center
Down back to center "6 mno" to insert the "n"
Up then right "1" to insert the apostrophe
Back to center
Left then down "8 tuv" to insert the "t"

The default value will most often suggest a period, if no other matches seem appropriate. The match function available on "*#" sequence up then left will also work in this situation, allowing the user to toggle through other choices like period, comma and similar special characters associated with the available on the "*#" sequence up then left.

Inserting digits in the text entry mode can be done in two ways. First of all, keeping the joystick in the last position of a sequence for a period longer than a given threshold, i.e. two seconds directly inserts the corresponding digit into the editor. For example moving the joystick from the center position down and holding the joystick down for longer than two seconds will enter the digit "6". Moving the joystick left and then down, and holding the joystick in this position for longer than two seconds will enter the digit "8". This is convenient when only inserting a few digits. However, for entering a long string of digits the menu "Options" has a submenu "Insert Number" that gives access to an insert number query window allowing the user to insert a string of digits by joystick movement as described previously for entering phone numbers, i.e. without the need to hold the joystick long in the end position. This is done by performing the joystick movement sequence associated the corresponding digit illustrated on the cover of the phone. After entering the desired number, the user presses the center switch S5 "OK" and the predictive text editing starts again.

The menu "Options" has another submenu "Insert Symbol" in which the user is given access to a plurality of symbols, characters and signs such as: @, $, £ and letters not occurring in the language used in the dictionary. The symbols are displayed in a matrix, a symbol in the matrix being marked by a cursor that can be moved/controlled by the joystick and the symbol marked by the cursor can be added to the text by activating the center switch S5 "Select".

### Searching alternative matches

In some situations, the key sequence entered by the user might allow several words to "fit". In this situation, the predictive editor program will always first suggest the two most "common" words from the core dictionary. Here after all the whole word matches from the user dictionary will be shown, and finally all remaining matches from the core dictionary are shown. In some cases, the user might be looking for another word other than the immediately suggested one. There might be two or more possible matches to the key sequence. This is most often the case with short words.

The user can switch to other possible matches by moving the joystick up then left "*#". The predictive editor program will respond by presenting the next possible match.

However, the "Options" center switch S5 will include a submenu called "Matches" giving access to a list of matches the user can scroll though the list by pressing the center switch S5 that will have the functionality "Next match". The alternative match candidate will replace the active underlined word in the text and the alternative match candidate is selected in the same way as the default match candidate - e.g. by moving the joystick up and back to the center to enter a space. The list is handled as a loop. If no matches beyond what is already displayed then a note will be displayed saying "No Match Found".

If there are several matches to the key-sequence typed by the user, moving the joystick up then left "*#" will immediately give the next possible match (the second most common match). A specific match from is finalized by finalizing the word as usual e.g. by inserting a space.

If the cursor 70 is touching a word that is not underlined and therefore not active, moving the joystick up then left "*#" will also render the word active again and offer the next match.

### No matching word

If the predictive editor program runs out of possible word matches during the typing of a word, the display will show a unique error symbol display directly after the entered characters and the center switch label 22 will change from "Options" to "Spell" providing a shortcut to the insert word query where the user can manually enter the desired word based on the multi tap editor type entry. The query should appear empty as seen in the display of Fig. 13.1. The user is allowed to enter letters by performing the joystick sequence associated with the group of letters containing the to be entered letter, followed by one to three activations of the center switch S5 within a predetermined timeout period (well known from conventional multi tap techniques on an alphanumerical keypad). One activation of the center switch S5 enters the first letter of a group, two activations of the center switch S5 enters the second letter of a group whilst three activations within the timeout period enters the third letter of a group. This mode of entry is used for spelling particular words that can not be provided by the predictive editor program, and also to enter names in the telephone book. The user accepts the word by pressing the center switch S5 having the functionality label 22 "OK" whereby the editor returns to editing by using the predictive editor program.

If the user continues to use the predictive editor program the last entered character will hence be displayed as an error symbol, to indicate to the user that no further possible words matches to the typed key sequence. The phone will emit a short alert beep to draw attention to indicate the lack of matches. If the user types more keys in the situation the display will not show more characters and an information note saying "No Match Found" will be shown.

If the user finds out that he misspelled the word, he can simply move the joystick diagonally up-left "Clr", until the incorrect character can be changed. If the user chooses to accept a misspelled or unknown word e.g. by inserting space character, the error symbol will disappear, and the last recognized word will be inserted into the text.

### Cursor movement

Since the predictive editor program input method basically can only handle adding or deleting at the end of a word, the cursor handling is optimized for this.

Given the situation where the cursor is placed at the end of the text. By moving the joystick diagonally up-right "Mode" the mode of the joystick changes to cursor control wherein up, down, right and left movements of the joystick cause corresponding movements of the cursor.

Using the joystick for scrolling left the editor will activate the entire word to the left of the cursor 70, allowing the user to add additional characters to the word (using both the pre-existing word and the new key-presses to generate matches).

Scrolling left again by moving the joystick left will move the cursor 70 to the left of the word (the previously underlined word now no longer active for editing and therefore no longer underlined) and the editor is ready to type a new word.

Scrolling left again moves the cursor to the end of previous word, underlining it, allowing the user to add to that existing word. This cycle repeats when navigating through the text.

If the user moves the cursor 70 through several consecutive spaces, the cursor 70 will be moved one space at a time. Also, when moving through symbols, numbers, etc., the cursor is moved one character at a time.

If the user wants to add a new word to the end or beginning of an existing word by using the predictive editor program, this is simply done by first moving the cursor to the end or beginning of the existing word, respectively. From here, the user simply starts typing the new word.

The editor application opens the already written word for editing with the predictive editor program by placing the cursor in the desired position. Then the editor application regenerates the sequence of entries based on the presently displayed matching word. When the editor application adds new entries to the regenerated sequence of entries in dependence of the position of the cursor and the key pressed. This new string is used by the predictive editor program to find new matches.

If the user wants to edit an existing word by using the predictive editor program, this is done first by moving the cursor just after the word (activating the word in question causing it to be underlined). Then the user can directly add e.g. an ending to the word or if desired, can delete characters by moving the joystick diagonally left-up "Clr".

Whenever the "Insert word" query is selected, by activating the center switch S5 "OK", the words that were entered in the query are added both to the user dictionary as well as to the main editor window. A confirmation note "Word saved" appears as well. Upon reentry to the predictive editor program, insertion point will be after the last letter of the manually only spelled word.

Moving the joystick diagonally up-right "Mode" for a second time brings the mode of the joystick back to text entry.

### Options lists

The "Option" menu in the predictive editor program will include some submenu items as:
Matches
Next Match
Insert Word
Insert Number
Insert Symbol
Dictionary

The match related items and the insert related items have already been discussed above. All languages supported by the predictive editor program for the phone will appear as choice items under "Dictionary" submenu item. The default language follows advantageously the display text language of the phone. This default may be to turn the predictive editor program off and revert to multi tap type input for the display text language when the predictive editor program does not include a dictionary supporting the language in question. Changing to another language will simply cause the predictive editor program to run in the new language.

### User dictionary

The predictive editor program may supports a user dictionary, where words not initially known by the program can be stored.

### Editing concept

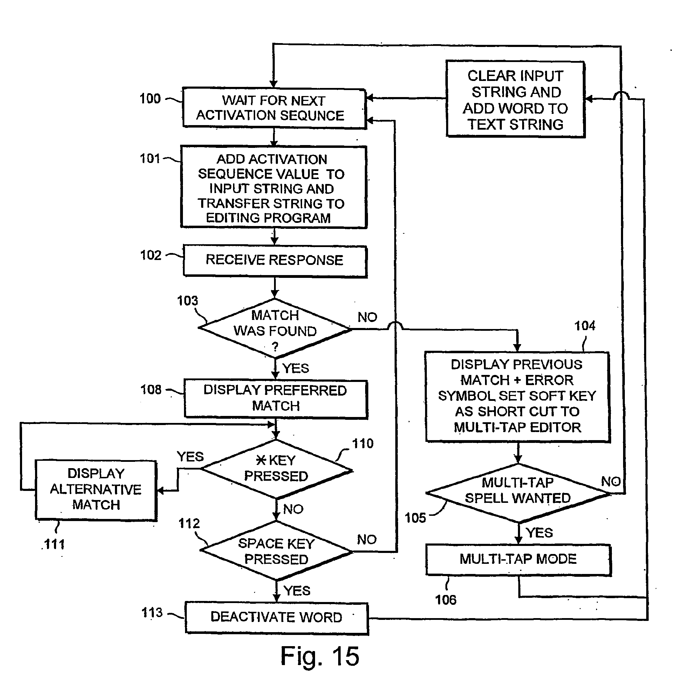

The basic editing concept is shown in Fig. 15. When the predictive editor is started up the editor starts to wait for a joystick activation sequence in step 100. When a joystick activation sequence is detected the data value allocated thereto is added to a joystick input string and transferred to the predictive editor program in step 101. The predictive editor program responds to this input in step 102 and in step 103 the processor 18 investigates whether the predictive editor program could find possible matches.

If no possible match is found in step 103 the last possible match is displayed in step 104 together with an error symbol and the function of the center switch S5 is changed to a short cut to the multi-tap spell mode.

If the user in step 105 accepts (by entering a space) the last possible match this word will be added to the text. Hereafter the joystick activation sequence string is cleared in step 106 and the editor starts to wait for a joystick activation sequence in step 100.

If the user in step 106 goes to the multi-tap spell mode he can enter the intended word in an unambiguous way in step 107. When accepting the entered word by pressing center switch S5 this word will be added to the text. Hereafter, the input string is cleared in step 106 and the editor starts to wait for a joystick activation sequence in step 100.

If the predictive editor program was able to find matches in step 103 the preferred one is displayed in step 108. In step 109 the next joystick activation sequence is read. In step 110 it is checked whether the user searches for alternative matches by moving the joystick left then up "+*". If this is the case the alternative match is displayed in step 111.

In step 112 it is checked whether the user accepts the displayed word by activating the center switch. If this is the case the word will no longer be active and will be added to the entered string of words in step 113. Hereafter, the input string is cleared in step 106 and the editor starts to wait for a joystick activation sequence in step 100.

If the joystick activation sequence is deemed to represent an ambiguous character the editor goes to step 101 for adding the joystick activation sequence to the input string for looking up matches.

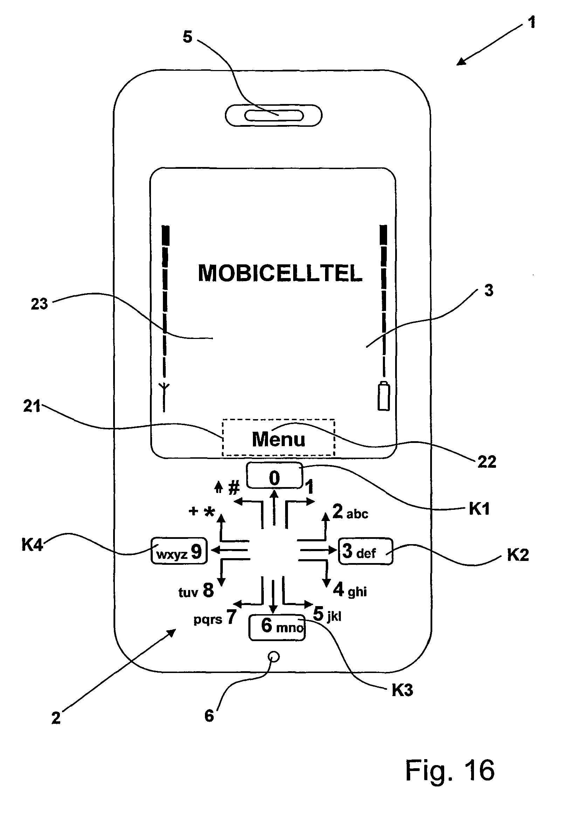

Fig. 16 illustrates a second example in which the joystick is replaced by four keys K1,K2,K3,K4. Switches S1,S2,S3 and S4 (not shown) are associated with keys K1,K2,K3 and K4 respectively. The operation of the keys is analogous to the first example and preferred embodiments described previously. Data values are allocated to activation sequences in accordance with the table 5 below:

**Table 5**

| First state active switches: | Second state active switches: | Data value entered |
|---|---|---|
| S1 | - | 0 |
| S1 | S1+S2 | 1 |
| S2 | S1+S2 | 2 |
| S2 | - | 3 |
| S2 | S2+S3 | 4 |
| S3 | S2+S3 | 5 |
| S3 | - | 6 |
| S3 | S3+S4 | 7 |
| S4 | S3+S4 | 8 |
| S4 | - | 9 |
| S4 | S1+S4 | 10 |
| S1 | S1+S4 | 11 |

In a number input state the entered data is equal to the data value concerned. In a text input mode letter groups having a plurality of letters are associated with the data values. Disambiguation is performed by multi tapping or using a predictive editor application as described above with reference to the first and second embodiment.

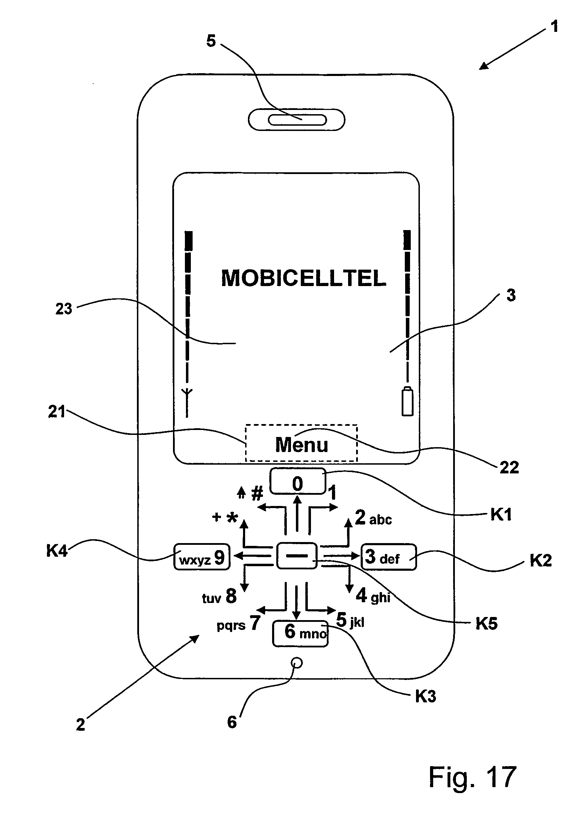

Fig. 17 discloses a variation of the second example, in which a fifth "enter" key with an associate switch S5 is added.

Data values are allocated to activation sequences in accordance with the table 6 below:

**Table 6**

| First state active switch: | Second state active switch: | Third state active switch: | Data value entered: |
|---|---|---|---|
| S1 | - | S5 | 0 |
| S1 | S2 | S5 | 1 |
| S2 | S1 | S5 | 2 |
| S2 | - | S5 | 3 |
| S2 | S3 | S5 | 4 |
| S3 | S2 | S5 | 5 |
| S3 | - | S5 | 6 |
| S3 | S4 | S5 | 7 |
| S4 | S3 | S5 | 8 |
| S4 | - | S5 | 9 |
| S4 | S1 | S5 | 10 |
| S1 | S4 | S5 | 11 |

The further processing of rendering a data value into a letter or number entry is as described above.

The invention has been described in detail with reference to a mobile phone. It is however understood that any other eclectic terminal could profit form the present type of input method and device. Also, other types of 4-way input devices such as e.g. trackballs can be used for the present invention. The input device has been illustrated without any other keys in the user interface. It is though also possible to combine the input device with more hard and/or soft keys.

Although the present invention has been described in detail for purpose of illustration, it is understood that such detail is solely for that purpose, and variations can be made therein by those skilled in the art without departing from the scope of the invention. Thus, while the preferred embodiments of the devices and methods have been described in reference to the environment in which they were developed, they are merely illustrative of the principles of the inventions. Other embodiments and configurations may be devised without departing from the scope of the appended claims.

## Claims

1. A method for entering data in an electronic terminal (1) having an eight-way input device (43) with a center position and a sensor (S1,S2,S3,S4) associated with each of four of the eight ways and a center sensor associated with activation of the input device (431) in the center position, the method comprising:
allocating a different data value to each of the four possible input device movement sequences that comprise a movement of the input device (43) from the center position in one of the four ways followed by a return of the input device (43) to the center position;
allocating a different data value to each of the eight possible input device movement sequences that comprise a movement of the input device (43) from the center position in one of the four ways followed by a movement of the input device (43) in another of the four ways without passing through the center position, wherein 8 of said 12 data values are associated with a digit and a plurality of preferably three or four letters of the alphabet;
allocating a different data value to each of the four possible input device movement sequences that comprise a diagonal movement of the input device (43) from the center position in one of four diagonal ways followed by a return of the input device (43) to the center position, wherein these data values are associated to commands;
detecting the input device movement sequences with the sensors associated with the four ways;
entering the data value allocated to an input device movement sequence upon detection by the sensors (S1,S2,S3,S4) of the input device movement sequence concerned, and
when it is detected that the duration of the activation of a last sensor in the input sequence allocated with the one of said 8 of said 12 data values concerned exceeds a threshold a digit is associated with the data value, or
disambiguating the data value associated with a plurality of letters with a predictive editor program for generating an output containing words matching a string of received data values having a plurality of letters associated therewith, or
disambiguating the data value entry having a plurality of letters associated therewith by the number of activations of the input device (43) in the center position that follows the sequence of the input device movement to which the data value concerned is allocated.

2. A method according to claim 1, wherein the letters of the alphabet are distributed over said eight different data values as follows: abc, def, ghi, jkl, mno, pqrs, tuv, and wxyz.

3. A method according to claim 2, wherein the character "space" is assigned to one of the other data values.

4. A method according to any of claims 1 to 3, wherein the input device movement sequences and the characters or commands associated therewith are shown on the terminal (1) as hard or soft labels proximate to the input device (43).

5. A method according to any of claims 1 to 4, wherein the four ways are arranged orthogonally, and the digits associated with the input device movement sequences are arranged in a clockwise sequence around the input device (43) in numeric order with the digit 0 in the twelve o'clock position and the digit 9 at the nine o'clock position.

6. A method according to any of claims 1 to 5, wherein a tone is sounded for each sensor activation, preferably followed by an input confirmation when a data value is successfully entered, or followed by a rejection tone when the data value entry failed.

7. A method according to any of claims 1 to 6, wherein the input device is an eight-way joystick.

8. A method according to any of claims 1 to 7, wherein the input device is an eight-way pad.

9. A method for entering data in an electronic terminal (1) according to claim 1 wherein the commands associated to the diagonal movements are taken from the group: Display Last dialed numbers, Display Phone number list, Change Volume, Backspace, Change from number entry mode to cursor movement control mode, Change from text entry mode to cursor movement control mode, Change from cursor movement control mode to number entry mode, Change from cursor movement control mode to text entry mode, Change center function, Reject call, Divert call, Navigate, Steer, Control.

10. An electronic terminal (1) comprising:
a display (3);
an eight-way input device (43) with a center position and a sensor (S1,S2,S3,S4) associated with each of four of the eight ways and a sensor associated with activation of the input device (43) in the center position;
a processor unit (18) monitoring the activation of the sensors (S1,S2,S3,S4) and controlling the information shown on the display (3);
a different data value being assigned to each of the four activation sequences that comprise the activation of one of the four sensors (S1,S2,S3,S4) followed by a return to the center position in which none of the four sensors (S1,S2,S3,S4) is active;
a different data value being assigned to each of the eight activation sequences that comprise the activation of one of the four sensors (S1,S2,S3,S4) and whilst the sensors (S1,S2,S3,S4) concerned is active followed by the activation of one of the other sensors (S1,S2,S3,S4), wherein 8 of said 12 said data values are associated with a digit and a plurality of preferably three or four letters of the alphabet;
allocating a different data value to each of the four possible input device movement sequences that comprise substantially simultaneous activation of two of the four sensors (S1,S2,S3,S4), said two sensors being neighboring to each other and said activation of the two sensors resulting from a diagonal movement of the input device, wherein these data values are associated to commands;
the processor unit (18) upon detection of an activation sequence having a data value allocated therewith accepting the data value concerned as entered and
the processor is adapted for:
when it is detected that the duration of the activation of a last sensor in the input device movement sequence associated with the data value concerned exceeds a threshold, associating a digit with the data value, or
disambiguating the data values associated with a plurality of letters with a predictive editor program for generating an output containing words matching a string of received data values having a plurality of letters associated therewith, or
disambiguating a data value entry having a plurality of letters associated therewith by the number of activations of the input device (43) in the center position that follows the sequence of input device movement to which the data value concerned is associated.

11. An electronic terminal (1) according to claim 10, wherein the terminal (1) has a plurality of operation modes taken from a group comprising a mode for numerical entry, in which digits are allocated to the data values, a mode for text entry, in which pluralities of letters of the alphabet are assigned to the data values and a navigation mode in which navigational commands are allocated to the data values.

12. An electronic terminal (1) according to claim 10 or 11, wherein the terminal (1) comprises a menu structure and the processor unit (18) allocates navigational commands to the data values when the menu is entered.

13. An electronic terminal (1) according to claim 11, wherein the simultaneous activation of two sensors (S1,S2,S3,S4) is associated with a clear or backspace function in the mode for numerical entry and the mode for text entry.

14. An electronic terminal (1) according to claim 10, wherein the simultaneous activation of two sensors (S1,S2,S3,S4) is associated with a change in the characters or commands allocated to the data values.

15. An electronic terminal (1) according to claim 10 wherein
the function of the center sensor is controlled and displayed by the processor unit (18) and is shown in a dedicated area of the display (3).

## Patentansprüche

1. Verfahren zum Eingeben von Daten in ein elektronisches Endgerät (1) mit einer Achtwege-Eingabevorrichtung (43) mit einer Mittelstellung und einem mit jedem von vier der acht Wege verknüpften Sensor (S1, S2, S3, S4) und einem Mittelsensor, der mit einer Aktivierung der Eingabevorrichtung (43) in der Mittelstellung verknüpft ist, wobei das Verfahren umfasst:
- Zuweisen eines unterschiedlichen Datenwerts für jede der vier möglichen Bewegungsabfolgen der Eingabevorrichtung, die eine Bewegung der Eingabevorrichtung (43) von der Mittelstellung in einen der vier Wege gefolgt von einer Rückkehr der Eingabevorrichtung (43) in die Mittelstellung umfasst;
- Zuweisen eines unterschiedlichen Datenwerts für jede der acht möglichen Bewegungsabfolgen der Eingabevorrichtung, die eine Bewegung der Eingabevorrichtung (43) von der Mittelstellung in einen der vier Wege gefolgt von einer Bewegung der Eingabevorrichtung (43) in einen anderen der vier Wege ohne Durchgang durch die Mittelstellung umfasst, wobei 8 der 12 Datenwerte mit einer Ziffer und einer Vielzahl von bevorzugt drei oder vier Buchstaben des Alphabets verknüpft werden;
- Zuweisen eines unterschiedlichen Datenwerts für jede der vier möglichen Bewegungsabfolgen der Eingabevorrichtung, die eine diagonale Bewegung der Eingabevorrichtung (43) von der Mittelstellung in einen der vier diagonalen Wege gefolgt von einer Rückkehr der Eingabevorrichtung (43) in die Mittelstellung umfasst, wobei diese Datenwerte mit Befehlen verknüpft werden;
- Erfassen der Bewegungsabfolgen der Eingabevorrichtung mit den Sensoren, die mit den vier Wegen verknüpft sind;
- Eingeben der Datenwerte, die einer Bewegungsabfolge der Eingabevorrichtung zugewiesen sind, auf die Erfassung der betreffenden Bewegungsabfolge der Eingabevorrichtung durch die Sensoren (S1, S2, S3, S4) hin; und
- wenn erfasst wird, dass die Dauer der Aktivierung eines letzten Sensors in der Eingabeabfolge, die dem einen der 8 der 12 betreffenden Datenwerte zugewiesen ist, einen Schwellenwert überschreitet, eine Ziffer mit dem Datenwert verknüpft wird; oder
- eindeutig machen des Datenwerts, der mit mehreren Buchstaben verknüpft ist, mit einem vorhersagenden Bearbeitungsprogramm zum Erzeugen einer Ausgabe, die Wörter enthält, die mit einer Zeichenfolge empfangener Datenwerte übereinstimmen, die mit mehreren Buchstaben verknüpft sind; oder
- eindeutig machen des Datenwerteintrags, der mit mehreren Buchstaben verknüpft ist, durch die Anzahl von Aktivierungen der Eingabevorrichtung (43) in der Mittelstellung, die der Bewegungsabfolge der Eingabevorrichtung folgt, welcher der betreffende Datenwert zugewiesen ist.

2. Verfahren nach Anspruch 1, wobei die Buchstaben des Alphabets über die acht verschiedenen Datenwerte wie folgt verteilt werden:
abc, def, ghi, jkl, mno, pqrs, tuv und wxyz.

3. Verfahren nach Anspruch 2, wobei das Zeichen "Leerzeichen" einem der anderen Datenwerte zugewiesen wird.

4. Verfahren nach irgendeinem der Ansprüche 1 bis 3, wobei die Bewegungsabfolgen der Eingabevorrichtung und die Zeichen oder die damit verknüpften Befehle auf dem Endgerät (1) als feste oder flexible Beschriftungen nahe der Eingabevorrichtung (43) gezeigt werden.

5. Verfahren nach irgendeinem der Ansprüche 1 bis 4, wobei die vier Wege orthogonal angeordnet sind, und die Ziffern, die mit den Bewegungsabfolgen der Eingabevorrichtung verknüpft sind, in einer Uhrzeiger-Abfolge um die Eingabevorrichtung (43) in numerischer Reihenfolge angeordnet sind, mit der Ziffer 0 in der Zwölf-Uhr-Stellung und der Ziffer 9 in der Neun-Uhr-Stellung.

6. Verfahren nach irgendeinem der Ansprüche 1 bis 5, wobei ein Ton für jede Sensoraktivierung erzeugt wird, bevorzugt gefolgt durch eine Eingabebestätigung, wenn ein Datenwert erfolgreich eingegeben ist, oder gefolgt durch einen Ablehnungston, wenn der Datenwerteintrag fehlgeschlagen ist.

7. Verfahren nach irgendeinem der Ansprüche 1 bis 6, wobei die Eingabevorrichtung ein Acht-Wege-Joystick ist.

8. Verfahren nach irgendeinem der Ansprüche 1 bis 7, wobei die Eingabevorrichtung ein Acht-Wege-Feld ist.

9. Verfahren zum Eingeben von Daten in ein elektronisches Endgerät (1) gemäß Anspruch 1, wobei die Befehle, die mit den diagonalen Bewegungen verknüpft sind, aus der folgenden Gruppe entnommen werden:
Zeige letzte gewählte Nummer an;
Zeige Liste von Telefonnummern an;
Verändere die Lautstärke; Rückschritt;
Wechsele von Modus für Eingabe von Nummern zu Modus für Steuerung der Bewegung des Eingabezeigers;
Wechsele von Modus für Eingabe von Text zu Modus für Steuerung der Bewegung des Eingabezeigers;
Wechsele von Modus für Steuerung der Bewegung des Eingabezeigers zu Modus für Eingabe von Nummern;
Wechsele von Modus für Steuerung der Bewegung des Eingabezeigers zu Modus für Eingabe von Text;
Wechsele Mittenfunktion;
Weise Anruf ab;
Leite Anruf um;
Navigiere;
Lenke;
Steuere.

10. Elektronisches Endgerät (1), umfassend:
- eine Anzeige (3);
- eine Achtwege-Eingabevorrichtung (43) mit einer Mittelstellung und einem mit jedem von vier der acht Wege verknüpften Sensor (S1, S2, S3, S4) und einem Mittelsensor, der mit einer Aktivierung der Eingabevorrichtung (43) in der Mittelstellung verknüpft ist;
- eine Prozessoreinheit (18), welche die Aktivierung der Sensoren (S1, S2, S3, S4) überwacht und die auf der Anzeige (3) gezeigten Informationen steuert;
- wobei jeder der vier möglichen Aktivierungsabfolgen, welche die Aktivierung von einem der vier Sensoren (S1, S2, S3, S4) gefolgt von einer Rückkehr in die Mittelstellung umfasst, in der keiner der vier Sensoren (S1, S2, S3, S4) aktiv ist, ein unterschiedlicher Datenwert zugewiesen wird;
- wobei jeder der acht möglichen Aktivierungsabfolgen, welche die Aktivierung von einem der vier Sensoren (S1, S2, S3, S4), und während die betreffenden Sensoren (S1, S2, S3, S4) aktiv sind, gefolgt von der Aktivierung von einem der anderen Sensoren (S1, S2, S3, S4) umfasst, ein unterschiedlicher Datenwert zugewiesen wird, wobei 8 der 12 der Datenwerte mit einer Ziffer und einer Vielzahl von bevorzugt drei oder vier Buchstaben des Alphabets verknüpft sind;
- Zuweisen eines unterschiedlichen Datenwerts für jede der vier möglichen Bewegungsabfolgen der Eingabevorrichtung, die eine im Wesentlichen gleichzeitige Aktivierung von zwei der vier Sensoren (S1, S2, S3, S4) umfasst, wobei die zwei Sensoren einander benachbart sind und die Aktivierung der zwei Sensoren aus einer diagonalen Bewegung der Eingabevorrichtung resultiert, wobei diese Datenwerte mit Befehlen verknüpft sind;
- wobei die Prozessoreinheit (18) bei einer Erfassung einer Aktivierungsabfolge, der ein Datenwert zugewiesen ist, den betreffenden Datenwert als eingegeben akzeptiert; und
- der Prozessor angepasst ist zum:
- Verknüpfen einer Ziffer mit dem Datenwert, wenn erfasst wird, dass die Dauer der Aktivierung eines letzten Sensors in der Bewegungsabfolge der Eingabevorrichtung, die mit dem betreffenden Datenwert verknüpft ist, einen Schwellenwert überschreitet; oder
- eindeutig machen der Datenwerte, die mit mehreren Buchstaben verknüpft sind, mit einem vorhersagenden Bearbeitungsprogramm zum Erzeugen einer Ausgabe, die Wörter enthält, die mit einer Zeichenfolge empfangener Datenwerte übereinstimmen, die mit mehreren Buchstaben verknüpft sind; oder
- eindeutig machen eines Datenwerteintrags, der mit mehreren Buchstaben verknüpft ist, durch die Anzahl von Aktivierungen der Eingabevorrichtung (43) in der Mittelstellung, die der Bewegungsabfolge der Eingabevorrichtung folgt, mit welcher der betreffende Datenwert verknüpft ist.

11. Elektronisches Endgerät (1) gemäß Anspruch 10, wobei das Endgerät (1) mehrere Betriebsmodi aufweist, die aus einer Gruppe entnommen sind, umfassend einen Modus zur numerischen Eingabe, in dem den Datenwerten Ziffern zugewiesen werden, einen Modus zur Texteingabe, in dem den Datenwerten mehrere Buchstaben des Alphabets zugewiesen sind, und einen Navigationsmodus, in dem den Datenwerten Navigationsbefehle zugewiesen sind.

12. Elektronisches Endgerät (1) gemäß Anspruch 10 oder 11, wobei das Endgerät (1) eine Menüstruktur umfasst und die Prozessoreinheit (18) den Datenwerten Navigationsbefehle zuweist, wenn das Menü betreten wird.

13. Elektronisches Endgerät (1) gemäß Anspruch 11, wobei die gleichzeitige Aktivierung von zwei Sensoren (S1, S2, S3, S4) in dem Modus für numerische Eingabe und dem Modus für Texteingabe mit einer Lösch- oder Rückschritt-Funktion verknüpft wird.

14. Elektronisches Endgerät (1) gemäß Anspruch 10, wobei die gleichzeitige Aktivierung von zwei Sensoren (S1, S2, S3, S4) mit einem Wechsel in den Buchstaben oder Befehlen verknüpft ist, die den Datenwerten zugewiesen sind.

15. Elektronisches Endgerät (1) gemäß Anspruch 10, wobei die Funktion des Mittelsensors von der Prozessoreinheit (18) gesteuert und angezeigt wird, und in einem dedizierten Bereich der Anzeige (3) gezeigt wird.

## Revendications

1. Procédé destiné à entrer des données dans un terminal électronique (1) ayant un dispositif d'entrée à huit voies (43) avec une position centrale et un capteur (S1, S2, S3, S4) associé à chacune de quatre des huit voies et un capteur central associé à l'activation du dispositif d'entrée (43), à la position centrale, le procédé comprenant les étapes consistant à :
allouer une valeur de données différente à chacune des quatre séquences possibles de mouvement de dispositif d'entrée qui comprend un mouvement du dispositif d'entrée (43) de la position centrale dans l'une des quatre voies suivi d'un retour du dispositif d'entrée (43) à la position centrale ;
allouer une valeur de données différente à chacune des huit séquences possibles de mouvement de dispositif d'entrée qui comprend un mouvement du dispositif d'entrée (43) de la position centrale dans l'une des quatre voies suivi d'un mouvement du dispositif d'entrée (43) dans une autre des quatre voies sans passer par la position centrale, dans lequel huit desdites 12 valeurs possibles sont associées à un chiffre et à une pluralité de trois ou quatre lettres de préférence de l'alphabet ;
allouer une valeur de données différente à chacune des quatre séquences possibles de mouvement de dispositif d'entrée qui comprend un mouvement diagonal du dispositif d'entrée (43) de la position centrale dans l'une des quatre voies diagonales suivi d'un retour du dispositif d'entrée (43) à la position centrale, dans lequel ces valeurs de données sont associées à des commandes ;
détecter les séquences de mouvement de dispositif d'entrée avec les capteurs associés aux quatre voies ;
entrer la valeur de données allouée à une séquence de mouvement de dispositif d'entrée à la détection par les capteurs (S1, S2, S3, S4) de la séquence de mouvement de dispositif d'entrée concernée, et
lorsqu'il est détecté que la durée de l'activation d'au moins un capteur dans la séquence d'entrée allouée à l'une desdites 8 desdites 12 valeurs de données concernées dépasse un seuil, un chiffre est associé à la valeur de données, ou
désambiguïser la valeur de données associée à une pluralité de lettres avec un programme éditeur prédictif pour générer une sortie contenant des mots correspondant à une chaîne de valeurs de données reçues ayant une pluralité de lettres qui lui est associée, ou
désambiguïser l'entrée de valeur de données ayant une pluralité de lettres qui lui est associée par le nombre d'activations du dispositif d'entrée (43) à la position centrale qui suit la séquence du mouvement de dispositif d'entrée à laquelle la valeur de données concernée est allouée.

2. Procédé selon la revendication 1, dans lequel les lettres de l'alphabet sont distribuées sur lesdites huit valeurs de données différentes comme suit : abc, def, ghi, jkl, mno, pqrs, tuv et wxyz.

3. Procédé selon la revendication 2, dans lequel le caractère « espace » est assigné à l'une des autres valeurs de données.

4. Procédé selon l'une quelconque des revendications 1 à 3, dans lequel les séquences de mouvement de dispositif d'entrée et les caractères ou les commandes qui leur sont associés sont indiquées sur le terminal (1) sous forme d'étiquettes rigides ou souples à proximité du dispositif d'entrée (43).

5. Procédé selon l'une quelconque des revendications 1 à 4, dans lequel les quatre voies sont agencées orthogonalement, et les chiffres associés aux séquences de mouvement de dispositif d'entrée sont agencés dans une séquence dans le sens des aiguilles d'une montre autour du dispositif d'entrée (43) par ordre numérique avec le chiffre 0 à 12 heures et le chiffre 9 à 9 heures.

6. Procédé selon l'une quelconque des revendications 1 à 5, dans lequel une sonnerie retentit pour chaque activation de capteur, de préférence suivie d'une confirmation d'entrée lorsqu'une valeur de données est entrée avec succès, ou suivie d'une sonnerie de rejet lorsque l'entrée de valeur de donnés échoue.

7. Procédé selon l'une quelconque des revendications 1 à 6, dans lequel le dispositif d'entrée est une manette à huit voies.

8. Procédé selon l'une quelconque des revendications 1 à 7, dans lequel le dispositif d'entrée est un pavé à huit voies.

9. Procédé destiné à entrer des données dans un terminal électronique (1) selon la revendication 1, dans lequel les commandes associées aux mouvements diagonaux sont prises dans le groupe se composant de : afficher les derniers numéros composés, afficher la liste des numéros de téléphone, changer le volume, retour arrière, passer du mode d'entrée de numéro au mode de contrôle de mouvement de curseur, passer du mode d'entrée de texte au mode de contrôle de mouvement de curseur, passer du mode de contrôle de mouvement de curseur au mode d'entrée de numéro, passer du mode de contrôle de mouvement de curseur au mode d'entrée de texte, changer de fonction centrale, rejeter l'appel, détourner l'appel, naviguer, diriger, contrôler.

10. Terminal électronique (1) comprenant :
un affichage (3) ;
un dispositif d'entrée à huit voies (43) avec une position centrale et un capteur (S1, S2, S3, S4) associé à chacune de quatre des huit voies et un capteur central associé à l'activation du dispositif d'entrée (43) à la position centrale ;
une unité de processeur (18) surveillant l'activation des capteurs (S1, S2, S3, S4) et contrôlant les informations présentées sur l'affichage (3) ;
une valeur de données différente étant assignée à chacune des quatre séquences d'activation qui comprend l'activation de l'un des quatre capteurs (S1, S2, S3, S4) suivi d'un retour à la position centrale à laquelle aucun des quatre capteurs (S1, S2, S3, S4) n'est actif ;
une valeur de données différente étant assignée à chacune des huit séquences d'activation qui comprend l'activation de l'un des quatre capteurs (S1, S2, S3, S4) puis, pendant que le capteur (S1, S2, S3, S4) concerné est actif, l'activation de l'un des autres capteurs (S1, S2, S3, S4), dans lequel 8 desdites 12 valeurs de données sont associées à un chiffre et une pluralité de trois ou quatre lettres de l'alphabet de préférence ;
allouer une valeur de données différente à chacune des quatre séquences possibles de mouvement de dispositif d'entrée comprenant sensiblement l'activation simultanée de deux des quatre capteurs (S1, S2, S3, S4), lesdits deux capteurs étant voisins l'un de l'autre et ladite activation des deux capteurs découlant d'un mouvement diagonal du dispositif d'entrée, dans lequel ces valeurs de données sont associées à des commandes ;
l'unité de processeur (18), à la détection d'une séquence d'activation à laquelle est allouée une valeur de données, acceptant la valeur de données concernée telle qu'elle est entrée, et
le processeur est apte à :
lorsqu'il est détecté que la durée de l'activation d'un dernier capteur dans la séquence de mouvement de dispositif d'entrée associée à la valeur de données concernée dépasse un seuil, associer un chiffre à la valeur de données, ou
désambiguïser les valeurs de données associées à une pluralité de lettres avec un programme éditeur prédictif pour générer une sortie contenant des mots correspondant à une chaîne de valeurs de données reçues ayant une pluralité de lettres qui lui est associée, ou
désambiguïser une entrée de valeur de données ayant une pluralité de lettres qui lui est associée par le nombre d'activations du dispositif d'entrée (43) à la position centrale qui suit la séquence du mouvement de dispositif d'entrée à laquelle la valeur de données concernée est associée.

11. Terminal électronique (1) selon la revendication 10, dans lequel le terminal (1) a une pluralité de modes de fonctionnement pris dans un groupe comprenant un mode d'entrée numérique, dans lequel des chiffres sont alloués aux valeurs de données, un mode d'entrée de texte dans lequel des pluralités de lettres de l'alphabet sont assignées aux valeurs de données et un mode de navigation dans lequel des commandes de navigation sont allouées aux valeurs de données.

12. Terminal électronique (1) selon la revendication 10 ou 11, dans lequel le terminal (1) comprend une structure de menu et l'unité de processeur (18) alloue des commandes de navigation aux valeurs de données lorsque le menu est entré.

13. Terminal électronique (1) selon la revendication 11, dans lequel l'activation simultanée de deux capteurs (S1, S2, S3, S4) est associée à une fonction d'effacement ou de retour arrière dans le mode d'entrée numérique et dans le mode d'entrée de texte.

14. Terminal électronique (1) selon la revendication 10, dans lequel l'activation simultanée de deux capteurs (S1, S2, S3, S4) est associée à un changement des caractères ou des commandes alloués aux valeurs de données.

15. Terminal électronique (1) selon la revendication 10, dans lequel la fonction du capteur central est contrôlée et affichée par l'unité de processeur (18) et est présentée dans une zone dédiée de l'affichage (3).
